# EUROPÄISCHE PATENTSCHRIFT

(11) **EP 1 166 867 B1**
(45) Veröffentlichungstag und Bekanntmachung des Hinweises auf die Patenterteilung: **15.09.2004**
(21) Anmeldenummer: 01114871.5
(22) Anmeldetag: 29.06.2001
(51) Int. Cl.: B01J 19/32

(54) **Packung für Wärme und Stoffaustauschkolonnen**
Packing for heat and mass transfer columns
Garnissage pour des colonnes de transfert de chaleur et de masse

(30) Priorität: 30.06.2000 DE 10031119
(43) Veröffentlichungstag der Anmeldung: 02.01.2002
(73) Patentinhaber: BASF AKTIENGESELLSCHAFT, 67056 Ludwigshafen (DE)
(72) Erfinder: Kaibel, Gerd, Dr., 68623 Lampertheim (DE); Stammer, Achim, Dr., 36695 Alabama (US); Stroezel, Manfred, 68549 Ilvesheim (DE)
(74) Vertreter: Isenbruck, Günter, Dr.

(56) Entgegenhaltungen:
- WO-A-94/12258
- GB-A- 1 569 828
- US-A- 2 983 495
- US-A- 4 296 050
- US-A- 4 710 326
- US-A- 5 523 062

## Beschreibung

Die Erfindung betrifft in Kreuzkanalstruktur ausgeführte Packungsbleche sowie Packungen zum Wärme- und Stoffaustausch zwischen einer Flüssigkeit und einem Gas in einer Kolonne, die solche Packungsbleche enthalten.

Bei der destillativen Aufarbeitung von Produktgemischen erzielt man im allgemeinen die besten Ergebnisse bei der sogenannten Gegenstromdestillation, auch Rektifikation genannt, d. h. einem Destillationsverfahren, bei dem die Flüssigkeit von oben nach unten und der Dampf von unten nach oben in der Kolonne strömen. Dabei kommt es zur Anreicherung der leichterflüchtigen Komponenten im Dampf und der schwerer flüchtigen Komponenten in der Flüssigkeit.

Dieser Stoff- und Wärmetransport wird durch in die Kolonne eingebaute Elemente, wie Kolonnenböden, Füllkörper oder geordnete Packungen, die für eine ausreichende Berührungszeit der Phasen und eine hinreichende große Phasengrenzfläche sorgen, intensiviert. Durch diese Kolonneneinbauten und den damit verbundenen abströmenden Rücklauf ergibt sich jedoch in der Kolonne ein Strömungswiderstand für den Dampf, der sogenannte Druckverlust. Der Druckverlust einer Kolonne hängt bei gegebener Kolonnengeometrie, d. h. Durchmesser und Kolonnenhöhe, neben Art und Menge der zu rektifizierenden Verbindungen sehr stark von der Art der Kolonneneinbauten ab.

Für die Auftrennung von Substanzgemischen, die eine hohe Trennleistung erfordern, verwendet man im allgemeinen Rektifizierkolonnen mit Einbauten aus geordneten Metallstrukturen. Diese in regelmäßiger Geometrie systematisch aufgebauten Packungen mit definierten Durchtrittsbereichen für die Gegenstromphasen zeichnen sich gegenüber allen anderen Einbauten durch höhere Belastbarkeit, eine bessere Trennwirkung und einen geringen spezifischen Druckverlust aus. Sie werden daher bei allen Vakuumrektifikationen eingesetzt, bei denen es wegen der Temperaturempfindlichkeit des zu trennenden Gemisches besonders auf eine Begrenzung des Kolonnendruckverlustes ankommt. Bei den geordneten Packungen haben sich Bauformen in Kreuzkanalstruktur, die aus Blechen, Streckmetall oder Drahtgeweben bestehen, besonders bewährt, zum Beispiel Metallgewebepackungen vom Typ BX und CY der Sulzer AG, CH-8404 Winterthur (vgl. Firmenschrift "Trennkolonnen für Destillation und Absorption" der Sulzer AG) und ähnlich wirksame Metallgewebepackungen anderer Hersteller, zum Beispiel Montz-Pak Typ A3, BSH oder B1 der Montz GmbH, D-40723 Hilden.

Eine schematische Darstellung solcher Kolonnen findet man beispielsweise auf Seite 103 des Lehrbuches "Thermische Trennverfahren" von K. Sattler, VCH Verlagsges mbH, Weinheim (BRD), 1988. Bezüglich näherer Einzelheiten über die Rektifikation von Substanzgemischen verweisen wir auf dieses Lehrbuch von Klaus Sattler, Seiten 101-225, insbesondere 120-160 und 199-214.

Bei diesen Packungen mit Kreuzkanalstruktur wird das Ausgangsmaterial meist zusätzlich mit Durchtrittsöffnungen versehen, beispielsweise mit kreisförmigen Löchern mit etwa 4 bis 6 mm Durchmesser, um die Flutgrenze der Packung anzuheben und eine höhere Kolonnenbelastung zu ermöglichen.

Unter Flutgrenze wird in diesem Zusammenhang das Gas- beziehungsweise Flüssigkeitsvolumen pro Zeit und Querschnittsfläche verstanden, bei dem die Rieselflüssigkeit in oder oberhalb der Schüttung bis zum vollständigen Überfluten aufgestaut bzw. vom Gasstrom mitgerissen wird. Eine Überschreitung dieser Belastung hat eine schnelle Abnahme der Trennwirkung und einen steilen Anstieg des Druckverlustes zur Folge (Einzelheiten in "Thermische Trennverfahren" von K. Sattler, VCH Verlagsges mbH, Weinheim (BRD), 2. Auflage, 1995, S. 240ff).

Die Durchtrittsöffnungen sind auf dem Packungsblech gleichmäßig verteilt.

Üblicherweise beträgt der Winkel, den die geknickten Flächen (im folgenden Knickflächen) miteinander bilden, im folgenden Knickwinkel (γ), etwa 60° bis 90°. Geordnete Packungen mit Packungsblechen, die kleinere Knickwinkel aufweisen, sind eher unüblich. Eine Ausnahme hiervon bildet die WO 98/50752, in der geordnete Packungen mit Packungsblechen, die einen kleineren Knickwinkel von kleiner 67 ° aufweisen, beschrieben werden.

Die Packungen werden zu einzelnen etwa 0,15 bis 0,25 m hohen Schichten zusammengefaßt. Jede Schicht ist aus einer Vielzahl von Einzellagen aus geknickten Blechen, Streckmetallen oder Geweben aufgebaut, wobei die Knicke bei den meisten Bauarten geradlinig verlaufen und in einem Winkel von üblicherweise 30 bis 45 ° zur Vertikalen, das heißt zur Kolonnenachse, geneigt sind. DE-A 196 05 286 beschreibt eine Sonderentwicklung von Packungen zum Einsatz bei der Auftrennung besonders hitzeempfindlicher Substanzen bei denen dieser Winkel auf 0 bis 25 °, vorzugsweise 3 bis 14 ° verringert ist, um bei Anwendungen im hohen Vakuum (etwa 1 mbar Kopfdruck) den Druckverlust der Packungen so weit wie möglich abzusenken.

Die bereits bekannten Packungen weisen den Nachteil auf, daß bereits bei relativ kleinen Flüssigkeitsbelastungen der Flüssigkeitsfilm auf den Packungsblechen instabil wird. Im allgemeinen ist der Flutpunkt um so niedriger, je größer die Neigung der Knicke gegen die Kolonnenachse ist.

Es ist somit Aufgabe der vorliegenden Erfindung, Packungen anzugeben, die eine größere Neigung der Knicke gegen die Kolonnenachse und einen höheren Flutpunkt in bezug auf ein bestimmtes Fluid ermöglichen.

Die erfindungsgemäße Lösung geht aus von einem Packungsblech, aufweisend geradlinige Knicke, die das Packungsblech in Knickflächen unterteilen, die eine von Knickkante zu Knickkante zu messende Breite **a** sowie Durchtrittsöffnungen aufweisen. Das erfindungsgemäße Packungsblech ist dann dadurch gekennzeichnet, daß ein Anteil **X** von mindestens 60 % der Durchtrittsöffnungen einen Abstand **b** von höchstens 0,4 **a** zu der unteren Knickkante aufweist.

Wie die Packungsbleche der bereits beschriebenen Packungen weist ein erfindungsgemäßes Packungsblech geradlinige Knicke auf. Diese Knicke unterteilen die Oberfläche des Packungsbleches in Teilflächen, die im Rahmen der Erfindung als Knickflächen bezeichnet werden. Die Breite dieser Knickflächen, die dem Abstand zweier benachbarter Knickkanten entspricht, also von Knick zu Knick zu messen ist, wird mit **a** bezeichnet. Auf den Knickflächen befinden sich Durchtrittsöffnungen, die auch Knickkanten überspannen können. Die Durchtrittsöffnungen können jede denkbare Geometrie aufweisen, insbesondere können sie als kreisrunde Löcher oder als Schlitze ausgestaltet sein, wobei Schlitze bevorzugt sind. Schlitze sind Durchtrittsöffnungen rechteckiger oder nahezu rechteckiger Geometrie mit einem Längen/Breiten-Verhältnis größer 1:1, bevorzugt zwischen 5:1 bis 1:1, insbesondere zwischen 4:1 bis 2:1, insbesondere von 3:1 bis 2:1, in der Regel aber kleiner 10:1. Bevorzugt verläuft die längere Seite des Schlitzes parallel oder im wesentlichen parallel (± 10°) zur den Knickkanten. Der Abstand einer Durchtrittsöffnung von einer Knickkante, b, ist von dem Punkt der Durchtrittsöffnung aus zu messen, der die größte Entfernung zur Knickkante aufweist. Diese Durchtrittsöffnungen können auf der Knickfläche im Rahmen der erfindungsgemäßen Regeln stochastisch verteilt sein, wobei der Abstand b einer Durchtrittsöffnung dann jeweils unterschiedlich wäre. Ferner können die Durchtrittsöffnungen nach bestimmten Regeln - wie gleicher Abstand längs einer Raumrichtung - angeordnet sein. Im Abstand b von der Knickkante sind nur auf einer Seite der Knickkante - der unten liegenden Knickkante - Durchtrittsöffnungen angebracht, während sie auf der anderen Seite der Knickkante fehlen. Es ist ferner möglich, daß ein Teil der Knicke keine Durchtrittsöffnungen aufweisen. Mindestens 60 % der Knicke eines Packungsblechs, vorzugsweise 80 %, insbesondere 90 %, vor allem 100 % der Knicke sollten einseitig Durchtrittsöffnungen aufweisen.

Das erfindungsgemäße Packungsblech unterscheidet sich von den bekannten Packungblechen dadurch, daß ein Anteil X von mindestens 60 % der Durchtrittsöffnungen einen Abstand b von höchstens 0,4 a zu einer Knickkante aufweist. X nimmt dabei bevorzugt Werte von mindestens 70 %, 80 % oder 90 % an, wobei X in einer besonders bevorzugten Ausführungsform 100 % beträgt. Der Abstand b ist bevorzugt kleiner oder gleich 0,3 a, 0,2 a oder 0,1 a; insbesondere beträgt der Abstand etwa 0,25 a. Bevorzugt überdeckt keine Durchtrittsöffnung eine Knickkante.

In einer weiteren Ausführungsform des erfindungsgemäßen Packungsblechs bilden die Knickflächen einen Winkel von 40 bis 120 °, bevorzugt von 60 bis 100°, insbesondere von 60 bis 90 °, vor allem von etwa 90 °.

In einer weiteren Ausführungsform beträgt der Anteil der von den Durchtrittsöffnungen einer Knickfläche eingenommenen Fläche 5 bis 40 % , bevorzugt 10 bis 30 %, insbesondere 10 bis 20 % dieser Knickfläche.

In einer weiteren Ausführungsform sind die Durchtrittsöffnungen rechteckig ausgeführt mit einem Längen/Breiten-Verhältnis von 5:1 bis 1:1, bevorzugt von 4:1 bis 2:1, insbesondere von 3:1 bis 2:1, wobei die längere Seite bevorzugt parallel zu den Knickkanten ausgerichtet ist.

Ein weiterer Gegenstand der Erfindung sind Packungen zum Wärme- und Stoffaustausch zwischen einer Flüssigkeit und einem Gas in einer Kolonne, enthaltend erfindungsgemäße Packungsbleche, wobei die Knickkanten einen Winkel (θ) von 20° bis 70°, bevorzugt von 30° bis 45° gegen die Kolonnenachse bilden. Diese Packungen weisen im übrigen wie die bekannten Packungen eine Kreuzkanalstruktur auf.

Der Erfindung liegt die Erkenntnis zugrunde, daß eine Flüssigkeit auf der Oberseite einer geneigten Oberfläche weitgehend stabil abläuft, während sie auf der Unterseite bei höheren Flüssigkeitsströmen zu Instabilitäten neigt. Dies führt zu Tropfenbildungen, die ein vorzeitiges Fluten, das heißt eine Herabsetzung des Flutpunktes, begünstigen.

Die erfindungsgemäßen Packungsbleche weisen bevorzugt Durchtrittsöffnungen in Nähe der Knickkanten auf. Durch diese wird das Fluid bevorzugt auf die Oberseite der geneigten Flächen geleitet und die Flüssigkeitsbelastung auf der kritischen Unterseite verringert, ohne daß das wesentliche Anteile des Fluids, wie bei den bekannten Packungsblechen durch Öffnungen inmitten der Knickflächen auf die kritische Unterseite gelangen. Hierbei ist es besonders vorteilhaft, die Durchtrittsöffnungen als Schlitze auszugestalten, wobei die längere Seite bevorzugt im wesentlichen parallel zu den Knickkanten verläuft. Dies ermöglicht nämlich, die Durchtrittsöffnungen nahe an die Knickkanten heranzuführen.

Durch die Verwendung der erfindungsgemäßen Packungsbleche in Packungen für Kolonnen kann der Flutpunkt, den diese Kolonnen in bezug auf ein betreffendes Fluid aufweisen, soweit erhöht werden, daß große Neigungswinkel der Knickkanten gegen die Kolonnenachse von bis zu etwa 70° zu realisieren sind, ohne daß praktisch die Trennleistung vermindert wird. Große Neigungswinkel sind bei großen Kolonnendurchmessern aufgrund der besseren Quervermischung der Brüdenströme wünschenswert.

Die Erfindung wird nachfolgend durch die Zeichnung näher beschrieben.

Es zeigt
- **Fig. 1**: einen Ausschnitt aus einem erfindungsgemäßen Packungsblech,
- **Fig. 2**: einen Ausschnitt aus einem weiteren erfindungsgemäßen Packungsblech nebst Draufsicht,
- **Fig. 3**: Photographien erfindungsgemäßer Packungsbleche,
- **Fig. 4**: Photographien weiterer erfindungsgemäßer Packungsbleche,
- **Fig. 5**: räumliche Lage eines erfindungsmäßen Packungsblechs.

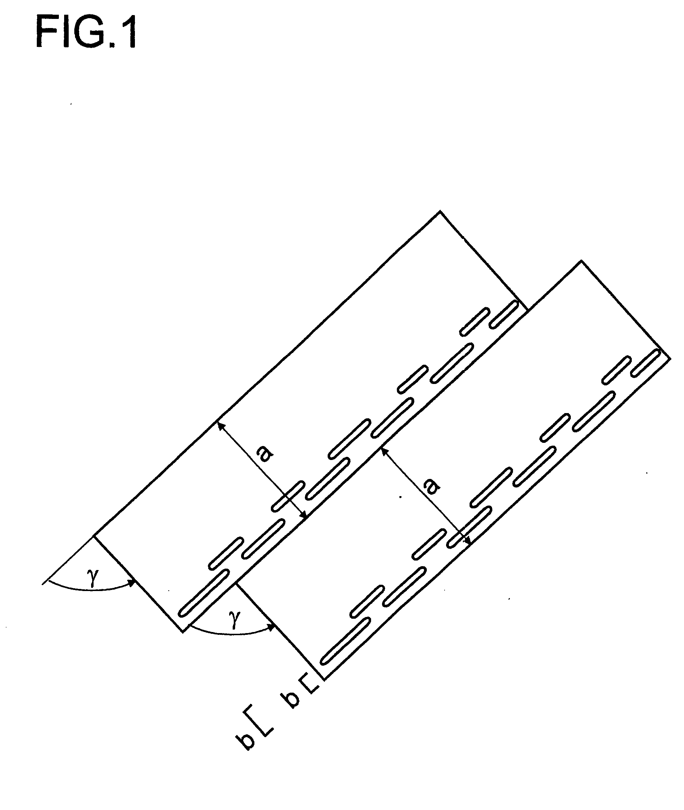

In Fig. 1 sind die Größen a, b, γ anhand eines Ausschnitts aus einem erfindungsgemäßen Packungsblech veranschaulicht. γ bezeichnet den Knickwinkel. Die Durchtrittsöffnungen sind hier als Schlitze ausgestaltet, die in Form zweier versetzt angeordneter Schlitzreihen ausgestalten sind. Die längere Seite der Schlitze verläuft parallel zu den Knickkanten. Dies ist aufgrund des Fließverhaltens der Fluide besonders vorteilhaft. Die Durchtrittsöffnungen können, wie in Fig. 1 gezeigt, auch verschiedene Abstände b zur Knickkante aufweisen.

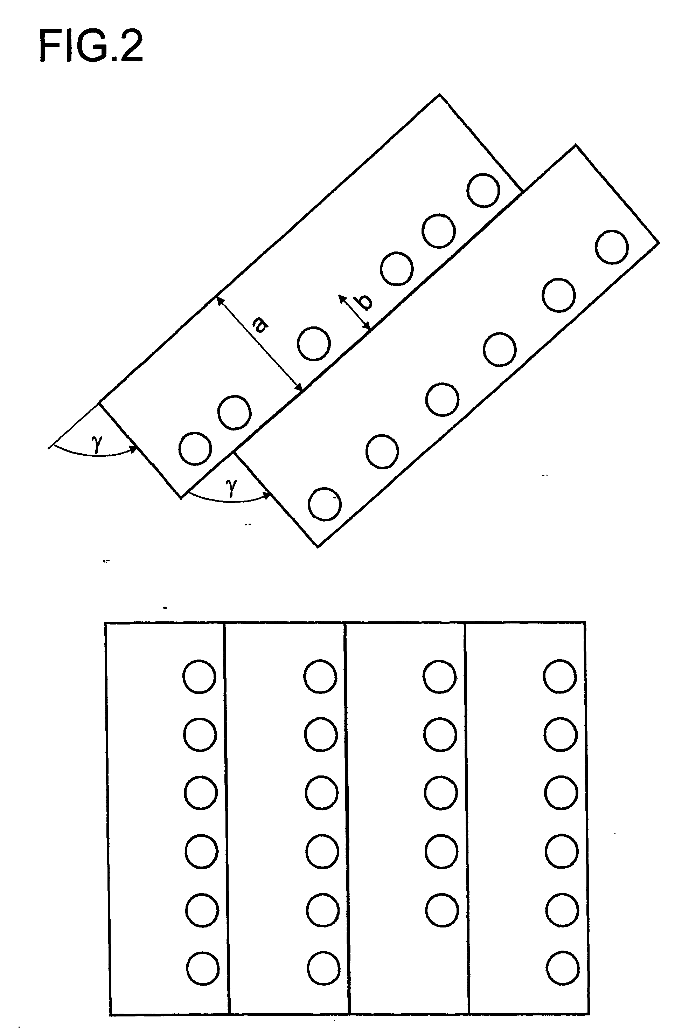

In Fig. 2 sind wie in Fig. 1 die Größen a, b, γ eingezeichnet. Die Durchtrittsöffnungen sind rund und nur auf einer Seite einer Knickkante.

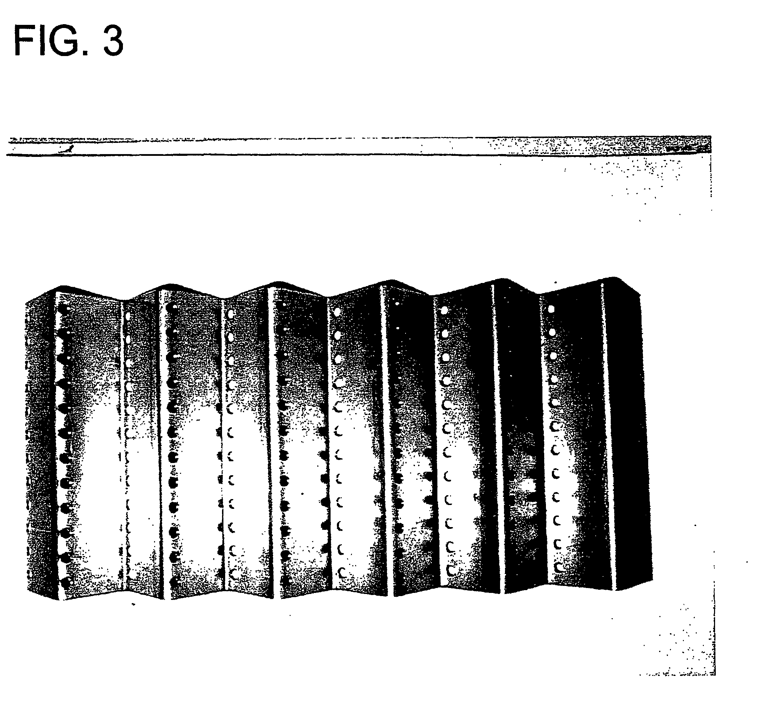

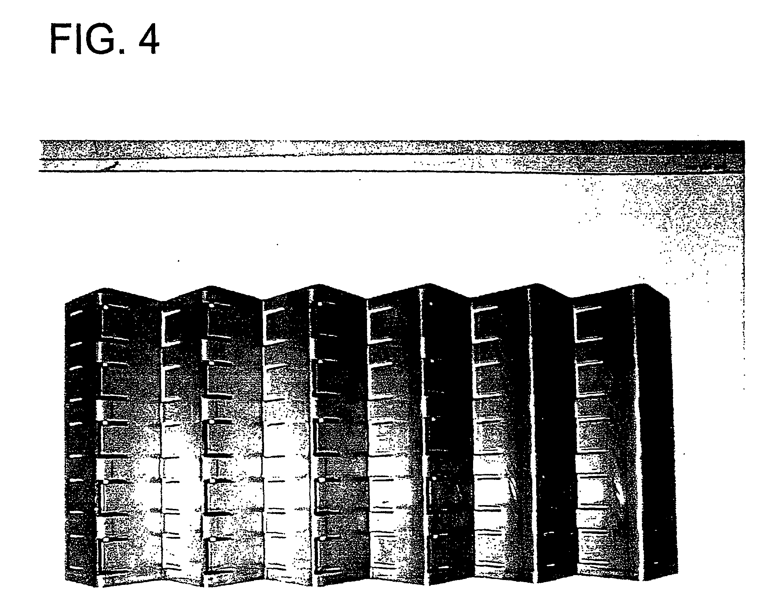

In Fig. 3 und 4 werden zwei Beispiele für erfindungsgemäße Packungsbleche gezeigt.

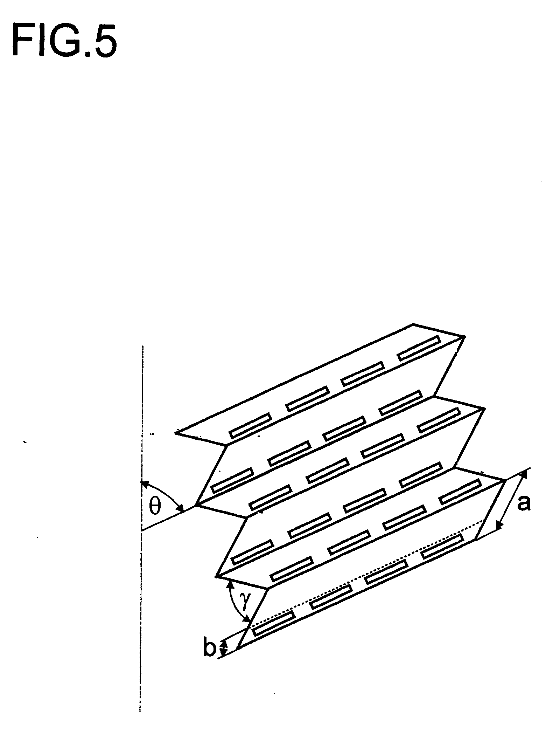

In Fig. 5 ist die räumliche Lage eines erfindungsgemäßen Packungsblechs skizziert. θ bezeichnet den Winkel, den die Knickkanten gegen die Kolonnenachse bilden.

### Beispiel 1

Gezeigt wird in Fig. 3 ein weiteres erfindungsgemäßes Packungsblech. Die als kreisrundes Loch ausgeführten Durchtrittsöffnungen sind einseitig angebracht. Alle Durchtrittsöffnungen (X = 100 %) befinden sich im Anstand b = 0,25 a von der Knickkante. Die Knickflächen bilden einen Winkel von 90°. Die Durchtrittsöffnungen nehmen eine Fläche von 15 % der Knickfläche ein.

### Beispiel 2

Gezeigt wird in Fig. 4 ein erfindungsgemäßes Packungsblech. Die als Spalt ausgeführten Durchtrittsöffnungen stehen senkrecht auf den Knickkanten und sind einseitig angebracht. Das Längen-/Breitenverhältnin der Durchtrittsöffnungen beträgt 5:1. Alle Durchtrittsöffnungen ( X = 100 %) befinden sich im Anstand b = 0,4 a von der Knickkante. Die Knickflächen bilden einen Winkel von 90°. Die Durchtrittsöffnungen nehmen eine Fläche von 7,5 % der Knickfläche ein.

## Patentansprüche

1. Packung zum Wärme- und Stoffaustausch zwischen einer Flüssigkeit und einem Gas in einer Kolonne, enthaltend Packungsbleche, aufweisend geradlinige Knicke, die jedes Packungsblech in Knickflächen unterteilen, die eine von Knickkante zu Knickkante zu messende Breite a sowie Durchtrittsöffnungen aufweisen, **dadurch gekennzeichnet, daß** jedes Packungsblech einen Anteil X von mindestens 60 % der Durchtrittsöffnungen mit einem Abstand b von höchstens 0,4 a zu einer Knickkante aufweist.

2. Packung nach Anspruch 1, **dadurch gekennzeichnet, daß** X mindestens 80 % beträgt.

3. Packung nach Anspruch 1, **dadurch gekennzeichnet, daß** X mindestens 90 % beträgt.

4. Packung nach einem der Ansprüche 1 bis 3, **dadurch gekennzeichnet, daß** b höchstens 0,3 a beträgt.

5. Packung nach einem der Ansprüche 1 bis 3, **dadurch gekennzeichnet, daß** b höchstens 0,2 a beträgt.

6. Packung nach einem der Ansprüche 1 bis 5, **dadurch gekennzeichnet, daß** die Knickflächen einen Winkel von 40° bis 120 °, bevorzugt von 60° bis 90° bilden.

7. Packung nach einem der Ansprüche 1 bis 6, **dadurch gekennzeichnet, daß** der Anteil der von den Durchtrittsöffnungen einer Knickfläche eingenommenen Fläche 5 bis 40 % , bevorzugt 10 bis 20 % dieser Knickfläche beträgt.

8. Packung nach einem der Ansprüche 1 bis 7, **dadurch gekennzeichnet, daß** die Durchtrittsöffnungen rechteckig mit einem Längen/Breiten-Verhältnis von 5:1 bis 1:1, bevorzugt von 3:1 bis 2:1 ausgeführt sind, wobei die längere Seite im wesentlichen parallel zu den Knickkanten ausgerichtet ist.

9. Packung gemäß einem der Ansprüche 1 bis 7, **dadurch gekennzeichnet, daß** die Knickkanten einen Winkel von 30° bis 45°, gegen die Kolonnenachse bilden.

## Claims

1. Packing for heat exchange and mass transfer between a liquid and a gas in a column, comprising packing sheets which have straight-line kinks which divide each packing sheet into kink areas which have a width a, measured from kink edge to kink edge, and passage apertures, wherein each packing sheet has a proportion X of at least 60% of the passage apertures with a separation b of at most 0.4 a from a kink edge.

2. Packing as claimed in claim 1, wherein X is at least 80%.

3. Packing as claimed in claim 1, wherein X is at least 90%.

4. Packing as claimed in any one of claims 1 to 3, wherein b is at most 0.3 a.

5. Packing as claimed in any one of claims 1 to 3, wherein b is at most 0.2 a.

6. Packing as claimed in any one of claims 1 to 5, wherein the kink areas form an angle of from 40° to 120°, preferably from 60° to 90°.

7. Packing as claimed in any one of claims 1 to 6, wherein the proportion of the area occupied by the passage apertures in a kink area is from 5 to 40%, preferably from 10 to 20%, of this kink area.

8. Packing as claimed in any one of claims 1 to 7, wherein the passage apertures are designed in rectangular form with a length/width ratio of from 5:1 to 1:1, preferably from 3:1 to 2:1, the longer side being aligned essentially parallel to the kink edges.

9. Packing as claimed in any one of claims 1 to 7, wherein the kink edges form an angle of from 30° to 45°, to the column axis.

## Revendications

1. Garnissage pour l'échange de chaleur et de matière entre un liquide et un gaz dans une colonne, contenant des tôles de garnissage présentant des plis linéaires qui subdivisent chaque tôle de garnissage en surfaces de pliage, qui présentent une largeur a à mesurer d'arête de pliage en arête de pliage ainsi que des orifices de passage, **caractérisé en ce que** chaque tôle de garnissage présente une proportion X d'au moins 60% des orifices de passage présentant une distance b d'au maximum 0,4 a par rapport à une arête de pliage.

2. Garnissage suivant la revendication 1, **caractérisé en ce que** X est d'au moins 80%.

3. Garnissage suivant la revendication 1, **caractérisé en ce que** X est d'au moins 90%.

4. Garnissage suivant l'une des revendications 1 à 3, **caractérisé en ce que** b est au maximum de 0,3 a.

5. Garnissage suivant l'une des revendications 1 à 3, **caractérisé en ce que** b est au maximum de 0,2 a.

6. Garnissage suivant l'une des revendications 1 à 5, **caractérisé en ce que** les surfaces de pliage forment un angle de 40° à 120°, de préférence de 60° à 90°.

7. Garnissage suivant l'une des revendications 1 à 6, **caractérisé en ce que** la fraction de la surface occupée par les orifices de passage d'une surface de pliage est de 5 à 40%, de préférence de 10 à 20%, de cette surface de pliage.

8. Garnissage suivant l'une des revendications 1 à 7, **caractérisé en ce que** les orifices de passage sont réalisés sous une forme rectangulaire avec un rapport longueur/largeur de 5/1 à 1/1, de préférence de 3/1 à 2/1, les plus longs côtés étant orientés sensiblement parallèlement aux arêtes de pliage.

9. Garnissage suivant l'une des revendications 1 à 7, **caractérisé en ce que** les arêtes de pliage forment un angle de 30° à 45° par rapport à l'axe de la colonne.
